# FASCICULE DE BREVET EUROPEEN

(11) **EP 3 316 350 B1**
(45) Date de publication et mention de la délivrance du brevet: **29.01.2020**
(21) Numéro de dépôt: 17199378.5
(22) Date de dépôt: 31.10.2017
(51) Int. Cl.: H01M 2/26, H01M 10/0525, H01M 2/22

(54) **PIECE DE CONNEXION ELECTRIQUE POUR ACCUMULATEUR**
ELEKTRISCHES ANSCHLUSSSTÜCK FÜR AKKUMULATOR
ELECTRICAL CONNECTION PIECE FOR ACCUMULATOR

(30) Priorité: 31.10.2016 FR 1660570
(43) Date de publication de la demande: 02.05.2018
(73) Titulaire: SAFT, 92300 Lavallois-Perret (FR)
(72) Inventeur: BEUGNON, Alexandre, 33290 LUDON MEDOC (FR); POUGET, Thomas, 33370 POMPIGNAC (FR)
(74) Mandataire: Hirsch & Associés

(56) Documents cités:
- CN-A- 101 027 802
- JP-A- H10 294 102
- JP-A- 2002 100 340
- JP-A- 2006 252 890
- US-A- 5 521 021
- US-A1- 2004 191 612

## Description

### DOMAINE TECHNIQUE

La présente invention concerne une pièce de connexion électrique pour accumulateur, ainsi qu'un accumulateur comprenant cette pièce de connexion électrique. Elle trouve notamment une application dans le domaine des générateurs de courant, ou accumulateurs, de type lithium-ion.

### ETAT DE LA TECHNIQUE

La technologie des accumulateurs de type lithium-ion utilise généralement un feuillard métallique mince comme support des électrodes, formant un faisceau d'électrodes. Ce feuillard est enduit d'une pâte comprenant la matière électrochimiquement active. Les extrémités du feuillard ne sont pas recouvertes de matière électrochimiquement active sur une portion de quelques millimètres de hauteur. Cette portion est utilisée pour la connexion à l'une des bornes de l'accumulateur, par soudure laser ou ultrason à une pièce métallique de connexion dont le rôle est de collecter le courant issu des électrodes. Cette pièce de connexion se présente généralement sous la forme d'une lamelle (ou languette) de cuivre, d'aluminium ou d'acier inoxydable, dont l'une des extrémités est soudée à la portion non recouverte de matière électrochimique du feuillard.

On connaît notamment de EP 2 093 820, EP 1 102 337 et EP 1 596 449, des exemples de pièce de connexion électrique destiné à assurer la connexion électrique entre une des bornes d'un accumulateur et le faisceau d'électrode, par soudure laser à ce faisceau d'électrodes tel qu'expliqué au paragraphe précédent.

Dans la plage de longueur d'onde du faisceau laser (environ 1063 nm), la réflectivité du métal de la pièce de connexion impacte de façon importante la qualité de la soudure. Si le métal de la pièce de connexion à souder est brillant (forte réflectivité), une partie du faisceau laser va être reflétée, ce qui affectera la qualité de la soudure, notamment en termes de tenue mécanique et de collectage du courant. Or, le passage du courant entre le faisceau d'électrode et la pièce de connexion électrique peut être fortement affecté si la soudure n'est pas optimale.

Par ailleurs, même en mode de fonctionnement normal de l'accumulateur, la soudure laser engendre un échauffement important pouvant provoquer des brûlures du séparateur et potentiellement une perte d'isolation du faisceau d'électrodes. Ces brûlures peuvent provoquer un court-circuit qui rend l'accumulateur inutilisable.

Egalement, les temps de cycle nécessaires au procédé de soudure laser (positionnement, soudure, etc...) rallongent le procédé de fabrication de l'accumulateur. De plus, l'outillage et les accessoires nécessaires au procédé de soudure laser (source, fibre tête de soudure, etc...) augmentent de façon non négligeable le coût de fabrication de l'accumulateur.

On connaît également de US 5 521 021 A, JP 2006 252890 A, US 2004/191612 A1, JP 2002 100340 A et JP H10 294102 A, des exemples de pièce de connexion électrique destinée à assurer la connexion électrique entre une des bornes d'un accumulateur et le faisceau d'électrode sans soudure, par contact mécanique, sans liaison chimique.

### RESUME DE L'INVENTION

Un des buts de l'invention est donc de résoudre notamment les problèmes précités, en proposant une pièce de connexion électrique pour un accumulateur, qui permette notamment d'assurer la connexion électrique avec le faisceau d'électrodes de l'accumulateur, sans soudure.

Ainsi, l'invention a pour objet, selon un premier aspect, une pièce de connexion électrique destinée à être connectée à une borne de sortie de courant d'un accumulateur, et comprenant une première partie destinée à être connectée à un faisceau d'électrodes de l'accumulateur, en sorte d'assurer la connexion électrique entre le faisceau d'électrodes et la borne de sortie.

La première partie est pourvue de moyens de contact destinés à assurer la connexion électrique avec le faisceau d'électrodes par contact mécanique sans liaison chimique.

Dans la présente demande, une connexion électrique par contact mécanique s'entend d'une connexion électrique entre deux pièces qui permet le passage de particules chargées électriquement d'une pièce à l'autre sans liaison chimique entre ces deux pièces, notamment sans soudure, comme indiqué à la revendication 1, sans matière ajoutée telle qu'une colle conductrice par exemple.

Suivant certains modes de réalisation, la pièce de connexion comprend en outre une ou plusieurs des caractéristiques suivantes, prise(s) isolément ou suivant toutes les combinaisons techniquement possibles :
- chacune des lamelles s'étend sur la distance maximale disponible le long d'un rayon de la première partie ;
- la première partie est pourvue de plusieurs évidements répartis entre les moyens de contact et/ou formés dans ces moyens de contact.
- les moyens de contact sont formés par tôlerie, par exemple par découpage dans la première partie ou par emboutissage dans la première partie depuis sa face opposée à la face de contact ;
- la pièce comprend une deuxième partie destinée à être connectée à la borne de sortie de courant de l'accumulateur, et la première et la deuxième parties sont reliées par une zone de pliage ;
- la deuxième partie prend la forme d'une lamelle sensiblement plane.

L'invention a également pour objet, selon un autre aspect, un accumulateur comprenant un faisceau d'électrodes et une borne de sortie du courant.

Le faisceau d'électrodes est connecté à la borne de sortie par une pièce de connexion telle que présentée plus haut.

Suivant certains modes de réalisation, l'accumulateur comprend en outre une ou plusieurs des caractéristiques suivantes, prise(s) isolément ou suivant toutes les combinaisons techniquement possibles :
- la connexion électrique entre la pièce de connexion et le faisceau d'électrodes est réalisée directement par contact mécanique au niveau des rives dudit faisceau d'électrodes ;
- la connexion entre la pièce de connexion et le faisceau d'électrodes est réalisée par enfoncement des moyens de contact dans les rives sur une distance inférieure ou égale à la distance déterminée de projection des moyens de contact depuis la face de contact de la première partie de la pièce de connexion ;
- le faisceau d'électrodes est disposé dans un conteneur fermé par un couvercle à travers lequel passe la borne de sortie de courant, une pièce de calage étant disposée entre la face de la première partie de la pièce de connexion, opposée à sa face de contact, et le couvercle, en sorte d'augmenter l'homogénéité du contact entre la première partie de la pièce de connexion et le faisceau d'électrodes, la pièce de calage étant apte à rattraper un jeu temporaire entre la première partie de la pièce de connexion et le faisceau d'électrodes ;
- le faisceau d'électrodes (4) est de type lithium-ion.

Ainsi, la pièce de connexion de l'invention permet une connexion électrique de qualité optimale avec le faisceau d'électrodes de l'accumulateur, par contact mécanique.

Ce contact mécanique, notamment sans soudure, supprime la variabilité dans la tenue mécanique et dans le contact électrique lui-même, ainsi que les brulures du séparateur. Il permet en outre de réduire le temps et le coût de fabrication d'un accumulateur de façon non négligeable.

### FIGURES

Les caractéristiques et avantages de l'invention apparaîtront à la lecture de la description qui suit, donnée à titre d'exemple, et non limitative, en référence aux figures suivantes :
- figure 1 : représentation schématique d'un accumulateur selon l'invention, comprenant une pièce de connexion électrique selon l'invention ;
- figure 2 : représentation schématique d'un premier exemple de pièce de connexion électrique selon l'invention ;
- figure 3 : représentation schématique d'un deuxième exemple de pièce de connexion électrique selon l'invention ;
- figure 4 : représentation schématique d'un troisième exemple de pièce de connexion électrique non couvert par l'invention ;

### EXPOSE DE MODES DE REALISATION

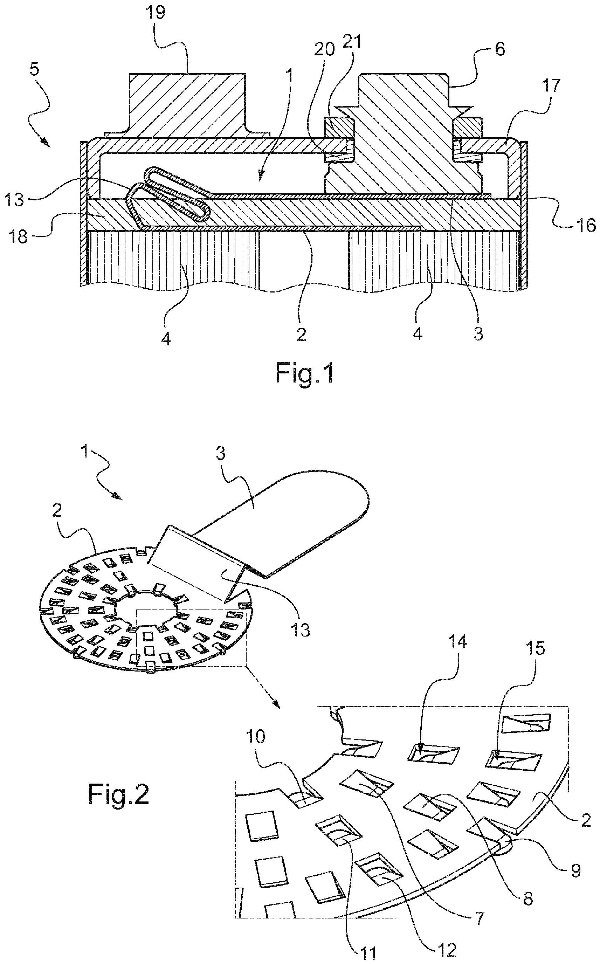

La figure 1 montre partiellement un exemple d'accumulateur selon l'invention, pourvu d'un exemple de pièce de connexion également selon l'invention.

L'accumulateur 5 comprend un faisceau électrochimique 4, par exemple de type lithium-ion, comportant une alternance d'électrodes positives et négatives encadrant des séparateurs imprégnés d'électrolyte. Typiquement, chaque électrode est composée d'un collecteur de courant métallique, appelé aussi feuillard, supportant sur au moins une de ses faces la matière électrochimiquement active.

Le faisceau électrochimique 4 est disposé dans un conteneur étanche 16, qui est cylindrique présentant une paroi couverte à l'une des extrémités du conteneur par un couvercle 17 qui supporte des bornes de sortie de courant 6 et 19. L'autre extrémité du conteneur étanche 16, non représentée sur la figure 1, est obturée par un fond.

Une première borne de sortie de courant, dans l'exemple la borne positive 19, est généralement soudée sur le couvercle 17. Une seconde borne de sortie de courant, dans l'exemple la borne négative 6, passe à travers le couvercle 17. Elle est généralement fixée sur celui-ci par des moyens de fixation 21 par sertissage ou vissage, et des joints 20 isolent électriquement cette borne de sortie de courant négative 6 du couvercle 17.

Les bornes de sortie de courant 17, 19 assurent la continuité électrique entre les électrodes du faisceau d'électrode 4 et l'application extérieure à laquelle l'accumulateur 5 est associé.

Une pièce 1 de connexion électrique connecte les électrodes négatives du faisceau d'électrode 4 à la borne de sortie de courant négative 6. Cette pièce 1 de connexion présente une première partie 2 connectée au faisceau d'électrodes 4, et une deuxième partie 3 connectée à la borne de sortie 6.

La connexion entre la première partie 2 de la pièce 1 de connexion avec le faisceau d'électrodes 4 est obtenue par des moyens de contact, non représentés sur la figure 1 pour simplifier cette figure 1, mais qui seront décrits ci-après de manière plus détaillée en référence aux figures 2 à 4 qui présentent différents exemples de réalisation de la pièce 1 de connexion. Ces moyens de contact sont aptes à assurer la connexion électrique entre la première partie 2 de la pièce 1 de connexion et le faisceau d'électrodes 4, par contact mécanique.

Comme on peut le voir sur la figure 1 notamment, la première 2 et la deuxième 3 parties de la pièce 1 de connexion peuvent être reliées par une zone de pliage 13. Cette zone de pliage 13 facilite notamment la fermeture de l'accumulateur 5 lors de l'assemblage de celui-ci.

Alternativement, dans le cas d'une connexion que l'on qualifie de directe, la pièce 1 de connexion ne comprend qu'une seule partie 2, sans zone de pliage 13 reliant cette partie 2 à une autre partie 3. Dans ce cas, la connexion entre la borne 6 et la pièce 1 de connexion se fait par la face de cette pièce 1 de connexion, donc de son unique partie 2, opposée à la face de contact de cette partie 2 destinée à être en contact avec le faisceau d'électrodes 4. La borne 6 est alors en contact direct avec la pièce 1 de connexion, donc avec son unique partie 2, par cette face opposée à la face de contact. Ce contact direct entre la borne 6 est la pièce 1 de connexion peut être obtenu par exemple par soudure, ou encore par connectique de contact mécanique.

La connexion entre la pièce 1 de connexion et le faisceau d'électrodes 4 est donc réalisée directement par contact mécanique au niveau des rives 4 des électrodes de ce faisceau d'électrodes 4. De préférence, ces rives 4 sont tassées, conformément par exemple à ce qui est décrit dans document EP 1 596 449.

On peut prévoir une pièce de calage 18, disposé entre la pièce 1 de connexion et le couvercle 17, pour augmenter l'homogénéité de contact entre la première partie 2 de la pièce 1 de connexion et le faisceau d'électrodes 4. Cet élément de calage 18, de préférence en matériau plastique tel que du polypropylène (PP) ou un polytéréphtalate de butylène (PBT), ou encore un polyétherimide (PEI), et qui peut prendre la forme d'une bague de calage 18, est apte à rattraper un jeu temporaire entre la première partie 2 de la pièce 1 de connexion et le faisceau d'électrodes 4.

Il est possible également de prévoir d'intégrer directement à la pièce 1 de connexion des moyens de rattrapage de jeu, utilisant les propriétés élastiques du métal composant cette pièce 1 de connexion.

Ce rattrapage de jeu permet ainsi d'atténuer une potentielle entrée en résonnance ou des chocs de masse interne, et compense les éventuelles variations de hauteur du faisceau électrochimique 4 d'un accumulateur 5 à l'autre.

Les figures 2 à 3 représentent respectivement deux exemples de réalisation d'une pièce 1 de connexion selon l'invention, qui peut être utilisé dans un accumulateur 5 tel que représenté à la figure 1.

Selon l'invention, la première partie 2 de la pièce 1 de connexion est sensiblement plane, reliée par la zone de pliage 13 à la deuxième partie 3 qui prend la forme d'une lamelle 3 également sensiblement plane.

Ainsi, dans ces exemples, la face de contact de la première partie 2, destinée à être en contact avec le faisceau d'électrodes 4, et la face de la deuxième partie 3 destinée à être en contact avec la borne 6, sont du même côté de la pièce 1 de connexion, c'est-à-dire qu'elles correspondent à deux parties de la même face de la pièce de connexion 1.

Par contre, dans l'alternative d'une connexion directe telle que présentée plus haut, la face de contact de l'unique partie 2 et la face de cette unique partie 2 destinée à être en contact avec la borne 6 font partie respectivement des deux faces opposées de la pièce 1 de connexion.

Dans tous les cas, sur sa face de contact destinée à être en contact avec le faisceau d'électrodes 4, la première partie 2 de la pièce 1 de connexion est pourvue de moyens de contact 7 à 12, qui sont formés dans le matériau de la première partie 2, par tôlerie, par exemple par emboutissage ou par découpage, en sorte de se projeter depuis la face de contact jusqu'à une distance déterminée de cette face de contact.

Selon l'invention, la première partie 2 de la pièce 1 de connexion présente une forme sensiblement circulaire. Les moyens de contact 7 à 12 sont alors répartis uniformément de façon circulaire sur la face de contact de la première partie 2. Egalement, ou alternativement, ces moyens de contact 7 à 12 peuvent être répartis uniformément de façon radiale sur la face de contact de cette première partie 2.

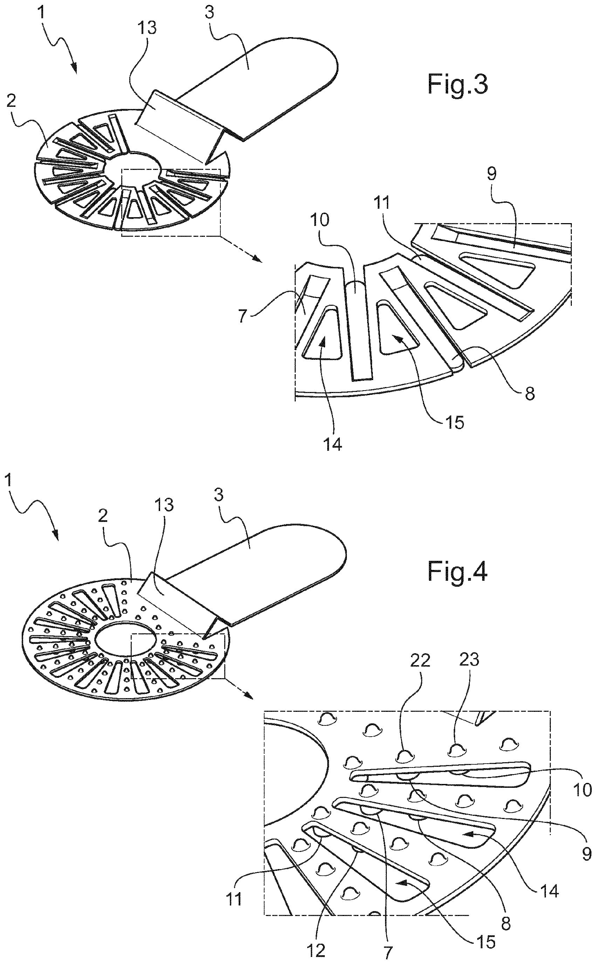

Selon l'invention, comme dans les exemples des figures 2 et 3, les moyens de contact 7 à 12 comprennent des lamelles 7 à 12. Chaque lamelle 7 à 12 présente une première partie solidaire de la première partie 2 de la pièce 1 de connexion, et une extrémité opposée libre qui se projette à distance déterminée de la face de contact de cette première partie 2.

Selon l'invention, comme c'est le cas dans ces deux exemples des figures 2 et 3, les lamelles 7 à 12 sont orientées radialement, c'est-à-dire qu'elles s'étendent depuis leur extrémité solidaire de la première partie 2 de la pièce 1 de connexion, vers leur extrémité libre, dans la direction d'un rayon de la forme sensiblement circulaire de cette première partie 2.

Selon l'invention, l'orientation radiale de ces lamelles 7 à 12 est alternée, ce qui facilite la connexion avec les rives 4 des électrodes qui se trouvent à différents diamètres par rapport à un axe de symétrie central de l'accumulateur 5.

Ainsi, dans l'exemple représenté à la figure 2, les lamelles 10, 11 et 12 sont orientées radialement dans un premier sens, et les lamelles 7, 8 et 9 sont orientées radialement dans le sens opposé par rapport au premier sens. De même, dans l'exemple représenté à la figure 3, les lamelles 10 et 11 sont orientées radialement dans un premier sens, et les lamelles 7, 8 et 9 sont orientées radialement dans le sens opposé par rapport au premier sens.

Dans le cas particulier de l'exemple de la figure 3, les lamelles 7 à 11 s'étendent sur la distance maximale disponible le long d'un rayon de la première partie 2, c'est-à-dire qu'elles sont formées par une découpe dans la première partie 2 de la pièce 1 de connexion depuis un point à proximité d'un bord extérieur ou intérieur jusqu'au bord opposé.

Dans cette variante de la figure 3, compte tenu de la longueur des lamelles 7 à 11, on obtient une élasticité de ces lamelles 7 à 11 importante, ce qui facilite le rattrapage de jeu tel qu'expliqué plus haut.

La figure 4 montre un autre exemple de réalisation, non couvert par l'invention, dans lequel les moyens de contact 7 à 12 prennent la forme de picots 7 à 12, qui s'étendent sensiblement perpendiculairement à la face de contact de la première partie 2 de la pièce 1 de connexion.

Ces picots 7 à 12 sont obtenus par emboutissage dans la face de la première partie 2, opposée à sa face de contact. L'emboutissage créé des creux, tels que les creux 22, 23 sur cette face opposée à la face de contact, et les picots correspondants, tels que les picots 9, 10, sur la face de contact.

La répartition homogène des picots 7 à 12 sur la face de contact de la première partie 2 de la pièce 1 de connexion, d'une largeur déterminée et en quantité déterminée, permet connexion électrique uniforme entre les électrodes du faisceau d'électrodes 4 et la face de contact de la première partie 2 de la pièce 1 de connexion.

De préférence, la largeur déterminée et la quantité déterminée de picots 7 à 12 est telle que la densité du courant passant entre la pièce 1 et le faisceau d'électrodes 4 est sensiblement comprise entre 5 et 10 A/mm².

A titre d'exemple, pour une première partie 2 présentant une surface sensiblement circulaire de l'ordre de 700 à 40000 mm², on prévoit de répartir 15 à 100 picots de largeur ou diamètre de l'ordre de 1 à 3 mm.

D'une manière générale, quels que soient les modes de réalisation, la répartition homogène des moyens de contact 7 à 12 sur la face de contact de la première partie 2 de la pièce 1 de connexion, de géométrie déterminée et en quantité déterminée, permet une connexion électrique uniforme entre les électrodes du faisceau d'électrodes 4 et la face de contact de la première partie 2 de la pièce 1 de connexion.

Quels que soient les modes de réalisation, les moyens de contact 7 à 12 présentent une géométrie telle, et sont présents en quantité telle, que la densité de courant passant entre la pièce 1 et le faisceau d'électrodes 4 est sensiblement comprise entre 5 et 10 A/mm².

La première partie 2 de la pièce 1 de connexion est pourvue par ailleurs d'évidements 14, 15. Ces évidements 14, 15 permettent d'augmenter la souplesse et la flexibilité de la première partie 2, ce qui facilite l'homogénéité de la connexion électrique lorsque la surface de contact présente un défaut de planéité. En outre, ces évidements permettent l'évacuation des gaz qui se forment lors du fonctionnement électrochimique de l'accumulateur.

Dans l'exemple de la figure 2, les évidements 14, 15 sont formés directement par la découpe des lamelles 7 à 12.

Dans les exemples respectifs des figures 3 et 4, ces évidements 14, 15 sont formés entre les moyens de contact 7 à 12, c'est-à-dire dans la matière de la première partie 2, entre les lamelles 7 à 11 de la figure 3 ou entre les picots 7 à 12 de la figure 4.

Ainsi, l'invention remplace avantageusement la connexion électrique par soudure entre la pièce 1 de connexion et les rives des électrodes du faisceau d'électrodes 4, par un contact mécanique. Lors de l'appui de la première partie 2 de la pièce 1 de connexion sur les rives des électrodes du faisceau d'électrodes 4, les moyens de contact 7 à 12, tels que les lamelles 7 à 12 de la figure 2, les lamelles 7 à 11 de la figure 3, ou les picots 7 à 12 de la figure 4, s'enfoncent dans les rives de ces électrodes à hauteur de la différence de plan entre les extrémités de ces moyens de contact 7 à 12 et la face de contact de la première partie 2.

Bien entendu, la présente invention n'est pas limitée aux modes de réalisation précédemment décrits à titre d'exemple.

Par ailleurs, la forme exacte des moyens de contact 7 à 12 n'est pas limitative de l'invention. Le design des lamelles 7 à 12 a une influence sur leur rigidité, donc sur leur capacité à se déplacer élastiquement vers la face de contact de la première partie 2, ou à l'opposé de cette face de contact, depuis une position initiale et à reprendre cette position initiale. D'autres formes de lamelles que celles représentées aux figures 2 et 3 peuvent permettre d'atteindre cet objectif.

## Revendications

1. Pièce (1) de connexion électrique destinée à être connectée à une borne (6) de sortie de courant d'un accumulateur (5), ladite pièce (1) comprenant une première partie (2) destinée à être connectée à un faisceau d'électrodes (4) dudit accumulateur (5), en sorte d'assurer la connexion électrique entre ledit faisceau d'électrodes (4) et ladite borne de sortie (6), la première partie (2) étant pourvue de moyens de contact (7 à 12) destinés à assurer la connexion électrique avec ledit faisceau d'électrodes (4) par contact mécanique sans liaison chimique, la première partie (2) présentant une forme sensiblement circulaire et plane avec une face de contact destinée à être en contact avec le faisceau d'électrodes (4), les moyens de contact (7 à 12) étant formés dans le matériau de la première partie (2) en sorte de se projeter depuis la face de contact jusqu'à une distance déterminée de la face de contact et étant répartis sur la face de contact uniformément de façon circulaire et de façon radiale, les moyens de contact (7 à 12) comprenant des lamelles (7 à 12) dont une extrémité est liée à la première partie (2) de la pièce (1) et dont l'extrémité opposée est libre et se projette à la distance déterminée de la face de contact, chacune des lamelles (7 à 12) s'étendant depuis son extrémité liée à la première partie (2) vers son extrémité libre dans la direction d'un rayon de la forme circulaire de la première partie (2), **caractérisé en ce qu'**au moins une partie (7 à 9) des lamelles (7 à 12) s'étend dans un premier sens et au moins une autre partie (10 à 12) de ces lamelles (7 à 12) s'étend dans le sens opposé au premier sens.

2. Pièce (1) selon la revendication 1, **caractérisée en ce que** chacune des lamelles (7, 8) s'étend sur la distance maximale disponible le long d'un rayon de la première partie (2).

3. Pièce (1) selon l'une quelconque des revendications précédentes, **caractérisée en ce que** la première partie (2) est pourvue de plusieurs évidements (14, 15) répartis entre les moyens de contact (7 à 12) et/ou formés dans ces moyens de contact (7 à 12).

4. Pièce (1) selon l'une quelconque des revendications précédentes, **caractérisée en ce que** les moyens de contact (7 à 12) sont formés par tôlerie, par exemple par découpage dans la première partie (2) ou par emboutissage dans la première partie (2) depuis sa face opposée à la face de contact.

5. Pièce (1) selon l'une quelconque des revendications 1 à 4, **caractérisée en ce qu'**elle présente une deuxième partie (3) destinée à être connectée à la borne (6) de sortie de courant de l'accumulateur (5), et **en ce que** la première (2) et la deuxième (3) parties sont reliées par une zone de pliage (13).

6. Pièce (1) selon la revendication 5, **caractérisée en ce que** la deuxième partie (3) prend la forme d'une lamelle (3) sensiblement plane.

7. Accumulateur (5) comprenant un faisceau d'électrodes (4) et une borne de sortie (6) du courant, **caractérisé en ce que** le faisceau d'électrodes (4) est connecté à la borne de sortie (6) par une pièce de connexion (1) selon l'une quelconque des revendications précédentes.

8. Accumulateur (5) selon la revendication 7, **caractérisé en ce que** la connexion électrique entre la pièce (1) de connexion et le faisceau d'électrodes (4) est réalisée directement par contact mécanique au niveau des rives (4) dudit faisceau d'électrodes (4).

9. Accumulateur (5) selon la revendication 8, la pièce de connexion (1) étant un pièce de connexion selon l'une quelconque des revendications 1 à 6, **caractérisé en ce que** la connexion entre la pièce (1) de connexion et le faisceau d'électrodes (4) est réalisée par enfoncement des moyens de contact (7 à 12) dans les rives (4) sur une distance inférieure ou égale à la distance déterminée de projection des moyens de contact (7 à 12) depuis la face de contact de la première partie (2) de la pièce de connexion (1).

10. Accumulateur (5) selon l'une quelconque des revendications 7 à 9, dans lequel le faisceau d'électrodes (4) est disposé dans un conteneur (16) fermé par un couvercle (17) à travers lequel passe la borne (6) de sortie de courant, **caractérisé en ce qu'**une pièce de calage (18) est disposée entre la face de la première partie (2) de la pièce de connexion (1), opposée à sa face de contact, et le couvercle (17), en sorte d'augmenter l'homogénéité du contact entre la première partie (2) de la pièce de connexion (1) et le faisceau d'électrodes (4), ledit élément de calage (18) étant apte à rattraper un jeu temporaire entre la première partie (2) de la pièce de connexion (1) et le faisceau d'électrodes (4).

11. Accumulateur (5) selon l'une quelconque des revendications 7 à 10, **caractérisé en ce que** le faisceau d'électrodes (4) est de type lithium-ion.

## Patentansprüche

1. Elektrisches Anschlussstück (1), das dazu bestimmt ist, an eine Stromausgangsklemme (6) eines Akkumulators (5) angeschlossen zu werden, wobei das Stück (1) einen ersten Teil (2) aufweist, der dazu bestimmt ist, an ein Elektrodenbündel (4) des Akkumulators (5) derart angeschlossen zu werden, um den elektrischen Anschluss zwischen dem Elektrodenbündel (4) und der Ausgangsklemme (6) zu gewährleisten, wobei der erste Teil (2) mit Kontaktmitteln (7 bis 12) versehen ist, die dazu bestimmt sind, den elektrischen Anschluss mit dem Elektrodenbündel (4) durch mechanischen Kontakt ohne chemische Verbindung zu gewährleisten, wobei der erste Teil (2) eine im Wesentlichen kreisförmige und ebene Form mit einer Kontaktfläche aufweist, die dazu bestimmt ist, mit dem Elektrodenbündel (4) in Kontakt zu sein, wobei die Kontaktmittel (7 bis 12) aus dem Material des ersten Teils (2) derart gebildet sind, um von der Kontaktfläche bis zu einem vorbestimmten Abstand von der Kontaktfläche vorzustehen und auf der Kontaktfläche gleichmäßig kreisförmig und radial verteilt sind, wobei die Kontaktmittel (7 bis 12) Lamellen (7 bis 12) aufweisen, wovon ein Ende mit dem ersten Teil (2) des Stücks (1) verbunden ist und wovon das entgegengesetzte Ende frei ist und in dem vorbestimmten Abstand von der Kontaktfläche vorsteht, wobei sich jede der Lamellen (7 bis 12) von ihrem Ende, das mit dem ersten Teil (2) verbunden ist, zu ihrem freien Ende in Richtung eines Radius der Kreisform des ersten Teils (2) erstreckt, **dadurch gekennzeichnet, dass** sich mindestens ein Teil (7 bis 9) der Lamellen (7 bis 12) in eine erste Richtung erstreckt und sich mindestens ein anderer Teil (10 bis 12) dieser Lamellen (7 bis 12) in die entgegengesetzte Richtung zur ersten Richtung erstreckt.

2. Stück (1) nach Anspruch 1, **dadurch gekennzeichnet, dass** sich jede der Lamellen (7, 8) über den maximal verfügbaren Abstand entlang eines Radius des ersten Teils (2) erstreckt.

3. Stück (1) nach einem der vorhergehenden Ansprüche, **dadurch gekennzeichnet, dass** der erste Teil (2) mit mehreren Ausnehmungen (14, 15) versehen ist, die zwischen den Kontaktmitteln (7 bis 12) verteilt und/oder in diesen Kontaktmitteln (7 bis 12) ausgebildet sind.

4. Stück (1) nach einem der vorhergehenden Ansprüche, **dadurch gekennzeichnet, dass** die Kontaktmittel (7 bis 12) durch Blechbearbeitung, beispielsweise durch Schneiden aus dem ersten Teil (2) oder durch Stanzen aus dem ersten Teil (2) von seiner Seite aus, die der Kontaktfläche gegenüberliegt, gebildet sind.

5. Stück (1) nach einem der Ansprüche 1 bis 4, **dadurch gekennzeichnet, dass** es einen zweiten Teil (3) aufweist, der dazu bestimmt ist, an die Stromausgangsklemme (6) des Akkumulators (5) angeschlossen zu werden, und dadurch, dass der erste (2) und der zweite (3) Teil durch einen Faltbereich (13) verbunden sind.

6. Stück (1) nach Anspruch 5, **dadurch gekennzeichnet, dass** der zweite Teil (3) die Form einer im Wesentlichen ebenen Lamelle (3) annimmt.

7. Akkumulator (5), umfassend ein Elektrodenbündel (4) und eine Stromausgangsklemme (6), **dadurch gekennzeichnet, dass** das Elektrodenbündel (4) durch ein Anschlussstück (1) nach einem der vorhergehenden Ansprüche an die Stromausgangsklemme (6) angeschlossen ist.

8. Akkumulator (5) nach Anspruch 7, **dadurch gekennzeichnet, dass** der elektrische Anschluss zwischen dem Anschlussstück (1) und dem Elektrodenbündel (4) direkt durch mechanischen Kontakt an den Kanten (4) des Elektrodenbündels (4) hergestellt wird.

9. Akkumulator (5) nach Anspruch 8, wobei das Anschlussstück (1) ein Anschlussstück nach einem der Ansprüche 1 bis 6 ist, **dadurch gekennzeichnet, dass** der Anschluss zwischen dem Anschlussstück (1) und dem Elektrodenbündel (4) durch Eindrücken der Kontaktmittel (7 bis 12) in die Kanten (4) über einen Abstand, der kleiner als oder gleich dem vorbestimmten Vorstehabstand der Kontaktmittel (7 bis 12) von der Kontaktfläche des ersten Teils (2) des Anschlussstücks (1) ist, hergestellt wird.

10. Akkumulator (5) nach einem der Ansprüche 7 bis 9, wobei das Elektrodenbündel (4) in einem Behälter (16) angeordnet ist, der durch einen Deckel (17) verschlossen ist, durch den die Stromausgangsklemme (6) hindurchgeht, **dadurch gekennzeichnet, dass** ein Keilstück (18) zwischen der Fläche des ersten Teils (2) des Anschlussstücks (1), die seiner Kontaktfläche gegenüberliegt, und dem Deckel (17) derart angeordnet ist, um die Homogenität des Kontakts zwischen dem ersten Teil (2) des Anschlussstücks (1) und dem Elektrodenbündel (4) zu erhöhen, wobei das Keilelement (18) geeignet ist, ein vorrübergehendes Spiel zwischen dem ersten Teil (2) des Verbindungsteils (1) und dem Elektrodenbündel (4) auszugleichen.

11. Akkumulator (5) nach einem der Ansprüche 7 bis 10, **dadurch gekennzeichnet, dass** das Elektrodenbündel (4) vom Lithium-Ionen-Typ ist.

## Claims

1. An electrical connection part (1) for connection to a current output terminal (6) of a secondary cell (5), said connection part (1) comprising a first portion (2) for connection to an electrode plate group (4) of said secondary cell (5) so as to provide electrical connection between said electrode plate group (4) and said output terminal (6), the said first portion (2) being provided with contact means (7 to 12) for establishing an electrical connection with said electrode plate group (4) by mechanical contact without chemical bonding, the first portion (2) having a substantially circular and planar shape with a face providing contact adapted to be in contact with the electrode plate group (4), the said contact means (7 to 12) being formed of the same material as the first portion (2) so as to project from the face providing contact to a determined distance from the face providing contact and being uniformly distributed on the face providing contact in a circular and radial pattern, said contact means (7 to 12) comprising lamellae (7 to 12), one end of which is connected to the first portion (2) of the connection part (1) and another end of which is free and projects at said determined distance from said face providing contact, each of the lamellae (7 to 12) extending from their end united with the first portion (2) towards their free end in the direction of a radius of the circular shape of the first portion (2), **characterized in that** at least one portion (7 to 9) of the lamellae (7 to 12) extends in a first direction and at least one other portion (10 to 12) of these lamellae (7 to 12) extends in an opposite direction to the first direction.

2. The connection part (1) according to claim 1, **characterized in that** each one of the lamellae (7, 8) extends over the maximum available distance along a radius of the first portion (2).

3. The connection part (1) according to any one of the preceding claims, **characterized in that** the first portion (2) is provided with a plurality of recesses (14, 15) distributed between the contact means (7 to 12) and/or formed in said contact means (7 to 12).

4. The connection part (1) according to any one of the preceding claims, **characterized in that** the contact means (7 to 12) are formed by sheet metal working, for example by cutting in the first portion (2) or by stamping in the first portion from its face opposed to the face providing contact.

5. The connection part (1) according to any one of claims 1 to 4, **characterized in that** it comprises a second portion (3) for connection to the current output terminal (6) of the secondary cell (5), and **in that** the first (2) and the second (3) portions are united by means of a region of folding (13).

6. The connection part (1) as claimed in claim 5, **characterized in that** the second portion (3) takes the form of a substantially planar lamella (3).

7. A secondary cell (5) comprising an electrode plate group (4) and a current output terminal (6), **characterized in that** the electrode plate group (4) is connected to the output terminal (6) by means of a connection part (1) according to any one of the preceding claims.

8. The secondary cell (5) according to claim 7, **characterized in that** the electrical connection between the connection part (1) and the electrode plate group (4) is made directly by mechanical contact at the edges of said electrode plate group (4).

9. The secondary cell (5) according to claim 8, the connection part (1) being a connection part according to any one of claims 1 to 6, **characterized in that** the connection between the connection part (1) and the electrode plate group (4) is made by sinking the contact means (7 to 12) into the edges of said electrode plate group (4) over a distance less than or equal to the determined distance of projection of the contact means (7 to 12) from the face providing contact of the first portion (2) of the connection part (1).

10. The secondary cell (5) according to any one of claims 7 to 9, wherein the electrode plate group (4) is disposed in a container (16) closed by a lid (17) through which the current output terminal (6) passes, **characterized in that** between the cover (17) and the face of the first portion (2) of the connection part (1) opposed to its face providing contact, a part having a packing function (18) is arranged, adapted to increase the homogeneity of contact between the first portion (2) of the connection part (1) and the electrode plate group (4), said part having a packing function (18) being capable of compensating for temporary clearance between the first portion (2) of the connection part (1) and the electrode plate group (4).

11. The secondary cell (5) according to any one of claims 7 to 10, **characterized in that** the electrode plate group (4) is of the lithium ion type.
